# DEMANDE DE BREVET EUROPEEN

(11) **EP 3 518 067 A1**
(43) Date de publication de la demande: **31.07.2019**
(21) Numéro de dépôt: 19154397.4
(22) Date de dépôt: 30.01.2019
(51) Int. Cl.: G05D 1/02

(54) **PROCÉDÉ ET DISPOSITIF ÉLECTRONIQUE DE CONTRÔLE DE LA VITESSE D'UN VÉHICULE AUTONOME, PROGRAMME D'ORDINATEUR, VÉHICULE AUTONOME ET PLATEFORME DE SUPERVISION ASSOCIÉS**

(30) Priorité: 30.01.2018 FR 1850749
(71) Demandeur: Transdev Group, 92130 Issy les Moulineaux (FR)
(72) Inventeur: BEAUVILLAIN, Alexis, 91300 Massy (FR)
(74) Mandataire: Lavoix

(57) **Abrégé**

L'invention concerne un procédé de contrôle de la vitesse d'un véhicule autonome muni au moins d'un module de conduite et d'un module de géolocalisation, le véhicule étant propre à suivre un trajet, prédéfini et segmenté selon au moins une segmentation comprenant une pluralité de segments, chacun associé à
+ un intervalle de données de géolocalisation, et
+ un ensemble de valeurs de vitesse de déplacement maximale nominale du véhicule, chaque valeur de vitesse étant associée à un créneau horaire distinct,
le procédé comprenant :
- l'acquisition (GEO), de la part du module de géolocalisation embarqué, d'une donnée de géolocalisation instantanée du véhicule associée à un instant temporel ;
- en fonction de la donnée de géolocalisation instantanée et de l'instant temporel, la détermination (DETERMINATION), du segment en cours de parcours et/ou à parcourir, et de la valeur de vitesse maximale associée.

## Description

La présente invention concerne un procédé de contrôle de la vitesse d'un véhicule autonome muni au moins d'un module de conduite autonome et d'un module de géolocalisation embarqués, le procédé étant mis en oeuvre par un dispositif électronique de contrôle.

L'invention concerne également un produit programme d'ordinateur associé.

L'invention concerne également un dispositif électronique de contrôle de la vitesse d'un véhicule autonome, le véhicule autonome étant muni d'au moins d'un module de conduite autonome et d'un module de géolocalisation embarqués, le véhicule autonome étant propre à suivre un trajet, prédéfini et segmenté selon au moins une segmentation.

L'invention concerne également un véhicule autonome tel que défini ci-dessus.

L'invention concerne également une plateforme externe de supervision d'une infrastructure pour véhicules autonomes, au moins un véhicule autonome étant tel que défini ci-dessus.

La vitesse d'un véhicule autonome est automatiquement contrôlée par un module de conduite autonome embarqué à bord du véhicule autonome. En présence d'un obstacle sur le trajet du véhicule autonome, il est nécessaire d'adapter efficacement, rapidement et automatiquement la vitesse du véhicule autonome pour minimiser la gravité de la collision et notamment l'impact vital sur des piétons et/ou passagers présents au sein de véhicule(s) intervenant dans la collision.

Pour y parvenir, les techniques actuelles sont basées sur des outils de perception d'obstacle(s) et/ou de gestion de collision, ces outils de perception et/ou de gestion de collision étant propres à être embarqués à l'intérieur du véhicule autonome ou localisés en dehors du véhicule autonome sur et/ou à proximité du trajet parcouru. L'inconvénient de ces techniques est lié à une éventuelle défaillance de ces outils de perception se traduisant par une dégradation de précision, voire une panne entrainant un arrêt total de fonctionnement du véhicule autonome ou encore un accident de la route.

Un objectif de l'invention est donc d'optimiser la sécurité routière (de navigation nautique ou aérienne ou encore ferroviaire ou plus généralement la sécurité de transport) associée au déplacement d'un véhicule autonome de sorte à minimiser la gravité de collision(s) impliquant un véhicule autonome notamment en termes d'impact humain.

A cet effet, l'invention a pour objet un procédé de contrôle de la vitesse d'un véhicule autonome muni au moins d'un module de conduite autonome et d'un module de géolocalisation embarqués, le véhicule autonome étant propre à suivre un trajet, prédéfini et segmenté selon au moins une segmentation, la segmentation comprenant une pluralité de segments de trajet chacun associé à
+ un intervalle de données de géolocalisation, et
+ un ensemble de valeurs de vitesse de déplacement maximale nominale du véhicule autonome, chaque valeur de vitesse étant associée à un instant temporel ou à un créneau temporel distinct,
le procédé étant mis en oeuvre par un dispositif électronique de contrôle et comprenant :
- l'acquisition, de la part du module de géolocalisation embarqué, d'une donnée de géolocalisation instantanée du véhicule autonome associée à un instant temporel ;
- la détermination, en fonction de la donnée de géolocalisation instantanée et de l'instant temporel, au sein de la segmentation du trajet, du segment en cours de parcours et/ou du segment suivant à parcourir de la valeur, et de la vitesse maximale nominale associée, destinés à être appliqués par le module de conduite autonome.

Ainsi, grâce à l'invention, la vitesse du véhicule autonome est asservie à la localisation spatio-temporelle du véhicule autonome, ce qui permet de relâcher les contraintes de fonctionnement des outils de perception d'obstacles et/ou de gestion de collision, propres à être embarqués au sein du véhicule autonome, et/ou localisés à l'extérieur du véhicule autonome, tout en assurant une vitesse maximale autorisée propre à minimiser la gravité d'une collision potentielle.

Selon d'autres aspects avantageux de l'invention, le procédé comprend une ou plusieurs des caractéristiques suivantes, prise(s) isolément ou suivant toute(s) combinaison(s) techniquement possible(s) :
- le procédé comprend en outre :
   - la réception d'une information représentative de la présence ou de l'absence d'un élément externe au véhicule autonome propre, en cas de contact avec le véhicule autonome, à en perturber la trajectoire sur le segment en cours de parcours et/ou à parcourir, l'information étant émise par au moins un dispositif externe au véhicule autonome,
   - en fonction de ladite information, la modification, ou respectivement le maintien, de la valeur de vitesse maximale nominale associée à appliquer ;
- l'élément externe est classé selon plusieurs catégories comprenant au moins :
   - un autre véhicule, distinct du véhicule autonome,
   - un piéton,
   - un phénomène météorologique ;
- chaque catégorie d'élément externe est associée à une valeur de modification de la valeur de vitesse maximale nominale ;
- la valeur de modification de la valeur de vitesse maximale nominale est une valeur de diminution, et dans lequel la valeur de diminution associée à la catégorie d'élément externe correspondant à la catégorie autre véhicule est inférieure à la valeur de diminution associée à la catégorie d'élément externe correspondant à la catégorie piéton ;
- le procédé comprend en outre :
   - la détection d'un défaut de fonctionnement du au moins un dispositif externe,
   - la commutation en mode dégradé, de la détermination de la valeur de vitesse maximale nominale associée, en considérant un pire cas de parcours correspondant à la présence d'un élément externe sur le segment en cours de parcours et/ou à parcourir, la catégorie d'élément externe correspondant à la catégorie piéton ;
- le procédé comprend en outre :
   - la réception de données de mises à jour de la segmentation du trajet prédéfini émises par une plateforme externe de supervision d'une infrastructure pour véhicules autonome,
   - à partir des données de mise à jour, la mise à jour de la segmentation du trajet prédéfini ;
- le véhicule autonome est muni en outre d'une horloge, et le procédé comprend en outre la transmission, à la plateforme externe de supervision pour traitement et mises à jour de la segmentation du trajet prédéfini, de :
   - données représentatives de la présence d'élément(s) externe(s) sur le trajet prédéfini, reçues d'au moins un dispositif externe du véhicule autonome, et/ou déterminées au moyen d'au moins un capteur embarqué à bord du véhicule autonome, et
   - l'instant de présence d'élément(s) externe(s) associé déterminé au moyen de l'horloge.

L'invention a également pour objet un programme d'ordinateur comprenant des instructions logicielles, qui lorsqu'elles sont exécutées par un processeur, mettent en oeuvre un procédé tel que défini ci-dessus.

L'invention a également pour objet un dispositif de contrôle de la vitesse d'un véhicule autonome, le véhicule autonome étant muni au moins d'un module de conduite autonome et d'un module de géolocalisation embarqués, le véhicule autonome étant propre à suivre un trajet, prédéfini et segmenté selon au moins une segmentation du trajet prédéfini, la segmentation comprenant une pluralité de segments de trajet chacun associé à
+un intervalle de données de géolocalisation, et
+ un ensemble de valeurs de vitesse de déplacement maximale nominale du véhicule autonome, chaque valeur de vitesse étant associée à un instant temporel ou à un créneau temporel distinct,
le dispositif comprenant :
- un module d'acquisition configuré pour acquérir, de la part du module de géolocalisation, une donnée de géolocalisation du véhicule autonome, associée à un instant temporel;
- un module de détermination configuré pour déterminer, en fonction de la donnée de géolocalisation instantanée et de l'instant temporel, au sein de la segmentation du trajet, le segment en cours de parcours et/ou à parcourir, et la valeur de vitesse maximale nominale associée, destinés à être appliqués par le module de conduite autonome.

L'invention a également pour objet un véhicule autonome comprenant au moins un dispositif de contrôle tel que défini ci-dessus.

Selon un aspect avantageux de l'invention, le véhicule autonome présente la caractéristique selon laquelle le module de géolocalisation et l'horloge sont conformes à un niveau d'effort de conception de sûreté de fonctionnement ASIL D.

L'invention a également pour objet une plateforme externe de supervision d'une infrastructure pour véhicules autonomes, au moins un véhicule autonome comprenant un module de conduite autonome et un module de géolocalisation embarqués, ledit véhicule autonome étant propre à suivre un trajet, prédéfini et segmenté selon au moins une segmentation du trajet prédéfini, la segmentation comprend une pluralité de segments de trajet chacun associé à
+ un intervalle de données de géolocalisation, et
+ un ensemble de valeurs de vitesse de déplacement maximale nominale du véhicule autonome, chaque valeur de vitesse étant associée à un instant ou un créneau horaire distinct,
la plateforme comprenant au moins un dispositif de contrôle de la vitesse dudit véhicule autonome, ledit dispositif de contrôle étant tel que défini ci-dessus.

D'autres caractéristiques et avantages de l'invention apparaîtront à la lecture de la description qui va suivre, donnée uniquement à titre d'exemple non limitatif, et faite en se référant aux dessins annexés, sur lesquels :
- la figure 1 est une vue schématique d'un ensemble d'éléments de l'architecture du véhicule autonome selon la présente invention ;
- la figure 2 est un diagramme en blocs, d'un exemple selon l'invention, de procédé de contrôle de la vitesse d'un véhicule autonome selon la figure 1 ; et
- les figures 3 à 5 illustrent une application du procédé selon l'invention.

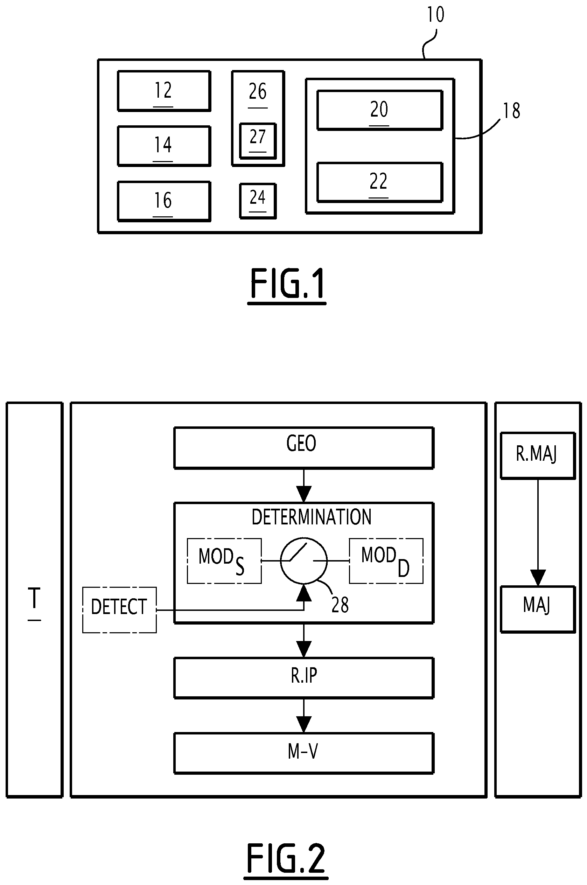

Dans l'exemple de la figure 1, le véhicule autonome 10 est une voiture autonome, un bus autonome, un tramway autonome, un train autonome, ou encore tout autre moyen de transport public autonome, etc.

Un tel véhicule autonome 10 comprend de manière connue (non représentée), des roues avant, des roues arrière, un moteur relié mécaniquement via une chaîne de transmission aux roues avant et/ou arrière pour l'entraînement desdites roues en rotation autour de leur axe, un système de direction, adapté pour agir sur les roues avant et/ou arrière du véhicule autonome 10 de manière à modifier l'orientation de sa trajectoire, et un système de freinage, adapté pour exercer une force de freinage sur les roues du véhicule autonome 10.

Selon l'invention, un tel véhicule autonome 10 est également muni au moins d'un module de conduite autonome 12, d'une horloge 14 et d'un module de géolocalisation 16 embarqués.

Par la suite, on entend par module de conduite autonome 12, un automate adapté pour piloter le véhicule autonome de manière autonome en recevant des informations sur l'environnement du véhicule autonome 10 par l'intermédiaire de capteurs, localisés à l'extérieur ou à l'intérieur du véhicule autonome, et en agissant sur le moteur (non représenté), le système de direction (non représenté) et le système de freinage (non représenté) de manière à modifier la vitesse et la trajectoire du véhicule autonome 10 en réaction aux informations reçues et de manière à se conformer à une mission programmée dans l'automate.

En particulier, une telle mission correspond au suivi d'un trajet prédéfini, tel que par exemple le trajet suivi par une ligne de bus ou de tramway ou de tout autre moyen de transport public autonome.

Selon la présente invention, un tel trajet est segmenté selon une pluralité de segments S1, S2, ...Si, .., SN de trajet chacun associé à
- un intervalle de données de géolocalisation, et
- un ensemble de valeurs de vitesse de déplacement maximale nominale du véhicule autonome 10, chaque valeur de vitesse étant associée à un instant temporel ou à un créneau temporel, tel qu'un créneau horaire, distinct avec 1≤i≤N.

Par exemple, onze créneaux horaires sont considérés : C₁ : de 0h à 2h du matin, C₂ : 2h à 6h, C₃ : de 6h à 8h, C₄ : de 8h à 10h, C₅ : de 10h à 11h30, C₆ : de 11h30 à 14h, C₇ : de 14h à 15h, C₈ : de 15h à 16h30, C₉ : de 16h30 à 18h, C₁₀ : de 18h à 20h30, C₁₁ : de 20h30 à 0h, et pour un segment Si donné, onze valeurs de vitesses Vmax₁, Vmax₂, ..., Vmax₁₁ y sont respectivement associées.

Par exemple, pour un segment Si et/ou Si+1 correspondant à une localisation géographique à proximité d'un établissement scolaire, la vitesse Vmax₂ associée au créneau horaire C₂: de 2h à 6h est de 50km/h tandis que la vitesse Vmax₈ associée au créneau horaire C₈: de 15h à 16h30 est de 30km/h pour ralentir lors de la sortie des classes synonyme d'une densité piétonnière élevée.

Par vitesse de déplacement maximale nominale, on entend une vitesse de déplacement maximale qui doit être prise en compte par le module de conduite autonome 12, en tant que vitesse de déplacement à ne pas dépasser. Autrement dit, une consigne de vitesse pour le véhicule autonome 10 sera inférieure à ladite vitesse de déplacement maximale nominale. L'homme du métier comprendra néanmoins que la vitesse de déplacement maximale du véhicule autonome 10 est susceptible d'être temporairement supérieure à cette vitesse de déplacement maximale nominale, par exemple en présence de circonstances extérieures provoquant une accélération imprévue du véhicule autonome 10.

Par horloge 14, on entend, par la suite, un instrument propre à mesurer le temps ou à délivrer un indicateur horaire.

Par module de géolocalisation 16, on entend, par la suite, un instrument propre à positionner le véhicule autonome 10 sur un plan ou une carte à l'aide de ses coordonnées géographiques. Un tel module de géolocalisation 16 est propre à être localisé, par exemple grâce à un système de positionnement par satellites, à recevoir son positionnement géographique en temps réel via, par exemple, un récepteur GPS et à le diffuser en temps réel.

D'autres techniques de géolocalisation sont utilisables selon l'invention, telles que la géolocalisation par géocodeur, par GSM, par WiFi, par utilisation d'une centrale inertielle, d'un radar ou encore d'un lidar.

De telles techniques de géolocalisation sont selon un aspect particulier de l'invention optimisées par une technique de repérage sur carte (de l'anglais *« Map Matching* ») ou encore une technique de cartographie et de localisation simultanées (SLAM de l'anglais « *Simultaneous localization and mapping »*)*.*

Selon un aspect particulier de l'invention, le module de géolocalisation 16 et l'horloge 14 sont conformes à un niveau d'effort de conception de sûreté de fonctionnement ASIL D (ASIL de l'anglais « *Automotive Safety Integrity Level* »), un tel niveau ASIL D représentant le degré maximal de rigueur requise pour assurer les exigences de sécurité associé à un niveau maximal de danger. L'ASIL étant par définition obtenu par multiplication d'un triplet de valeurs respectivement représentatives de trois critères de sûreté à savoir la sévérité, l'exposition et la contrôlabilité.

Autrement dit, lors de la conception du véhicule autonome 10 selon la présente invention, le niveau maximal de précision en termes d'indication(s) temporelle(s) délivrée(s) par l'horloge 14 et en termes de précision de géolocalisation géographique du véhicule autonome 10 délivrée par le module de géolocalisation 16 est exigé.

Selon l'invention, la vitesse du véhicule autonome 10 est contrôlée, c'est-à-dire surveillée, ou encore pilotée, par un dispositif électronique de contrôle 18.

Dans l'exemple de la figure 1, le véhicule autonome 10 comprend le dispositif électronique de contrôle 18.

En variante, non représentée, le dispositif électronique de contrôle 18 est distinct du véhicule autonome 10 et externe à ce dernier. Selon cette variante, le dispositif électronique de contrôle 18 est par exemple inclus dans une plateforme externe de supervision d'une infrastructure pour véhicules autonomes.

Le dispositif électronique de contrôle 18 est configuré pour contrôler, c'est-à-dire surveiller, ou encore piloter, la vitesse du véhicule autonome 10, et comprend un module d'acquisition 20 configuré pour acquérir, de la part du module de géolocalisation 16, par exemple en temps réel, une donnée de géolocalisation instantanée du véhicule autonome, associée à un instant temporel *t.*

Le dispositif électronique de contrôle 18 comprend un module de détermination 22 configuré pour déterminer, en fonction de la donnée de géolocalisation instantanée et de l'instant temporel *t,* au sein du trajet segmenté, le segment en cours de parcours et/ou à parcourir, et la valeur de vitesse maximale nominale associée, destinés à être appliqués par le module de conduite autonome 12.

Par ailleurs, selon un aspect particulier, le véhicule autonome 10 comprend également un capteur 24 ou un ensemble 24 de capteurs propre(s) à déterminer et délivrer au moins une donnée représentative de la présence d'élément(s) externe(s) sur le trajet prédéfini.

Par « élément externe sur le trajet prédéfini », on entend tout élément propre à perturber le trajet prédéfini du véhicule autonome 10, que ce soit par déviation propre à provoquer une sortie de segment, par arrêt non prévu au cours du trajet prédéfini tel que l'arrêt subséquent à un accident, par modification de la vitesse normalement associée en l'absence de cet élément externe au parcours du véhicule sur le segment en cours de parcours et/ou à parcourir.

En particulier, selon la présente invention, l'élément externe est classé selon plusieurs catégories comprenant au moins :
- un autre véhicule, distinct du véhicule autonome 10,
- un piéton,
- un phénomène météorologique tel que le vent, la pluie, le verglas, la neige ...,
- etc.

Enfin, le véhicule autonome 10 comprend au moins une mémoire 26 dédiée, ou un espace mémoire 26 dédié, d'une mémoire utilisée également pour d'autres applications de stockage de données du véhicule autonome 10, au stockage de la segmentation 27 du trajet prédéfini du véhicule autonome 10.

Dans l'exemple de la figure 1, le dispositif électronique de contrôle 18 comprend une unité de traitement d'informations formée par exemple d'une mémoire et d'un processeur associé à la mémoire, non représentés.

Dans l'exemple de la figure 1, le module d'acquisition 20 et le module de détermination 22 sont réalisés chacun sous forme d'un logiciel, ou d'une brique logicielle, exécutable par le processeur. La mémoire du dispositif électronique de contrôle 18 est alors apte à stocker un logiciel d'acquisition, de la part du module de géolocalisation 16, d'une donnée de géolocalisation instantanée du véhicule autonome, associée à un instant temporel *t* et un logiciel de détermination, en fonction de la donnée de géolocalisation instantanée et de l'instant temporel *t,* au sein du trajet segmenté, du segment en cours de parcours et/ou à parcourir, et de la valeur de vitesse maximale nominale associée, destinés à être appliqués par le module de conduite autonome 12. Le processeur est alors apte à exécuter chacun des logiciels parmi le logiciel d'acquisition et le logiciel de détermination.

En variante non représentée, le module d'acquisition 20 et le module de détermination 22 sont réalisés chacun sous forme d'un composant logique programmable, tel qu'un FPGA (de l'anglais *Field Programmable Gate Array),* ou encore sous forme d'un circuit intégré dédié, tel qu'un ASIC (de l'anglais *Application Specific Integrated Circuit).*

Lorsque le dispositif électronique de contrôle 18 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est, par exemple, un medium apte à mémoriser des instructions électroniques et à être couplé à un bus d'un système informatique. A titre d'exemple, le support lisible est une disquette ou disque souple (de l'anglais *Floppy Disk),* un disque optique, un CD-ROM, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Une telle segmentation 27 est par exemple obtenue initialement à partir d'une base de données (non représentée) de transport externe au véhicule autonome 10, par exemple une base de données fournie par le service technique des remontées mécaniques et des transports guidés (STRMTG) ou tout autre service de transport collectif autonome.

Selon une variante, le véhicule autonome 10 est propre à parcourir plusieurs trajets géographiques prédéfinis distincts associés chacun respectivement à une segmentation 27 qui leur est propre et stockée au sein de la mémoire ou de l'espace mémoire dédié(e) 26.

Le procédé de contrôle de la vitesse du véhicule autonome 10 précédemment décrit va maintenant être décrit en référence à la figure 2 illustrant un organigramme de ses étapes mises en oeuvre par le dispositif électronique de contrôle 18.

Plus précisément, le dispositif électronique de contrôle 18 est propre à mettre en oeuvre, via son module d'acquisition 20, une étape GEO d'acquisition, par exemple en temps réel et de la part du module de géolocalisation 16, d'une donnée de géolocalisation instantanée du véhicule autonome 10 associée à un instant temporel *t.*

Puis, selon une étape suivante DETERMINATION, en fonction de la donnée de géolocalisation instantanée et de l'instant t, le dispositif de contrôle 18 détermine, via son module de détermination 22 et au sein de la segmentation 27 du trajet, le segment Si en cours de parcours et/ou Si+1 à parcourir, et la valeur de vitesse maximale Vmax nominale, associée à ce segment Si ou au segment Si+1 déterminé, à appliquer par le module de conduite autonome 12.

En d'autres termes, selon l'invention la vitesse du véhicule autonome 10 est automatiquement asservie à sa localisation spatio-temporelle, par exemple en temps réel.

Par temps réel, on entend typiquement une acquisition, respectivement un asservissement effectué en un laps de temps inférieur à un seuil prédéfini, typiquement en un laps de temps inférieur à 10 ms.

En d'autres termes, la donnée de géolocalisation instantanée du véhicule autonome 10 délivrée par le module de géolocalisation 16 est comparée automatiquement (i.e. sans intervention humaine) par le dispositif électronique de contrôle 18 à la segmentation 27 du trajet prédéfini. Lors de cette comparaison, le segment Si dont l'intervalle de données de géolocalisation comprend la donnée de géolocalisation instantanée du véhicule autonome 10 est identifié comme le segment Si en cours de parcours par le véhicule autonome 10.

Un tel segment Si est par ailleurs associé au sein de la segmentation 27 à un ensemble de valeurs de vitesse de déplacement maximale nominale du véhicule autonome 10, chaque valeur de vitesse étant associée à un instant ou à un créneau horaire distinct avec 1≤i≤N. L'instant *t* associé à la donnée de géolocalisation instantanée est alors comparé automatiquement à chaque créneau temporel, par exemple à chaque créneau horaire, afin de déterminer celui le comprenant, et la valeur de vitesse de déplacement maximale nominale du véhicule autonome 10, associée à la fois à ce segment Si et à ce créneau horaire, est alors obtenue en vue de son application automatique et immédiate par le module de conduite autonome 12.

Par application immédiate, on entend typiquement une application effectuée en un laps de temps inférieur à un seuil prédéfini, typiquement en un laps de temps inférieur à 10 ms.

Selon une alternative ou en complément, on considère le segment suivant Si+1 à parcourir afin d'anticiper la consigne de vitesse maximale à transmettre au module de conduite autonome 12. Selon cet aspect, le véhicule autonome 10 sera alors propre à connaître la vitesse maximale à laquelle il devra rouler avant même de rentrer dans le segment suivant Si+1 à parcourir.

Ainsi, une telle localisation spatio-temporelle permet de prendre en compte à la fois les dangers liés à l'infrastructure de parcours (routier ou ferroviaire ou encore naval du trajet) et les dangers liés à la probabilité temporelle d'irruption d'un élément externe propre à perturber le trajet prédéterminé du véhicule autonome 10.

Par exemple, à proximité d'un bâtiment public, tel qu'une école, la présence de piétons est plus élevée aux heures habituelles de début et de fin de cours qu'en dehors de ces heures de cours.

Selon une première variante de réalisation supplémentaire et optionnelle, le procédé selon la présente invention comprend également une étape R_I_{P} de réception d'une information I_{P} représentative de la présence ou de l'absence d'un élément externe au véhicule autonome 10 propre, en cas de contact avec le véhicule autonome 10, à en perturber la trajectoire sur le segment en cours de parcours et/ou à parcourir, l'information étant émise par au moins un dispositif externe au véhicule autonome 10.

Un tel dispositif externe est par exemple, un détecteur de présence placé à proximité d'un passage piéton, d'une intersection, d'un ralentisseur, etc. Un tel détecteur de présence correspond par exemple à une caméra, à un détecteur de mouvement, à un ou plusieurs lidars, ou encore à un ou plusieurs radars.

Selon une autre variante, un tel dispositif externe correspond à la plateforme externe de supervision d'une infrastructure pour véhicules autonomes, la plateforme étant propre à recevoir une ou de(s) information(s) I_{P} représentative(s) de la présence d'un ou d'une pluralité d'élément(s) externe(s) au véhicule autonome potentiellement propre(s) à pénétrer sur le parcours à venir du véhicule autonome, voire à en perturber potentiellement le trajet, et propre à transmettre un signal représentatif de la perturbation potentielle globale du trajet du véhicule autonome.

Autrement dit, à partir d'entrées multiples correspondant à des données de perception d'élément(s) externe(s) perturbateur(s) transmis par des détecteurs de présence multiples ou à partir de bulletins météo ou d'informations de trafic produites par des dispositifs de génération d'information externes au véhicule autonome 10 et/ou externes à la plateforme de supervision, la plateforme de supervision est propre à générer et transmettre au véhicule autonome 10 un signal synthétisant l'ensemble de ces informations représentatives de perturbations potentielles du trajet du véhicule autonome et propre à indiquer la catégorie d'élément externe et la valeur de modification de vitesse à prendre en compte.

Puis, selon cette première variante de réalisation supplémentaire et optionnelle, en fonction de ladite information I_{P} représentative de la présence ou de l'absence d'un élément externe, le procédé comprend une étape M_V de modification, ou respectivement de maintien, de la valeur de vitesse maximale nominale associée à appliquer, précédemment obtenue à partir de la seule donnée de géolocalisation instantanée associée à son instant d'obtention par géolocalisation *t.*

Autrement dit, une telle première variante permet de renforcer l'optimisation de la vitesse du véhicule autonome 10 en l'enrichissant d'une perception de l'environnement extérieur en cours de parcours ou à parcourir immédiatement.

Selon une caractéristique particulière de cette première variante, chaque catégorie d'élément externe est associée à une valeur de modification de la valeur de vitesse maximale nominale qui lui est propre.

En particulier, la valeur de modification de la valeur de vitesse maximale nominale est une valeur de diminution, et la valeur de diminution associée à la catégorie d'élément externe correspondant à la catégorie « autre véhicule » est inférieure à la valeur de diminution associée à la catégorie d'élément externe correspondant à la catégorie « piéton ».

En d'autres termes, selon une telle règle d'association entre catégorie d'élément externe et de valeur de diminution de vitesse, la réduction de la valeur de vitesse maximale nominale autorisée est plus importante en présence d'un piéton qu'en présence d'un autre véhicule, la gravité potentielle d'un choc inter-véhicule, en termes d'impact humain, étant inférieure à celle associée à un choc véhicule-piéton.

Selon un autre aspect supplémentaire optionnel, cumulatif ou non avec la première variante de réalisation citée précédemment, le procédé comprend en outre :
- la détection DETECT d'un défaut de fonctionnement dudit au moins un dispositif externe,
- la commutation 28 en mode dégradé MOD_{D}, de la détermination DETERMINATION de la valeur de vitesse maximale nominale associée à appliquer par le module de conduite autonome 12, en considérant un pire cas de parcours correspondant à la présence d'un élément externe sur le segment en cours de parcours ou à parcourir, la catégorie d'élément externe correspondant à la catégorie associée à une valeur maximale de diminution de vitesse du véhicule autonome 10, par exemple celle associée à la catégorie piéton.

Autrement dit, en cas de défaillance des dispositifs externes propres à permettre un ajustement optimisé du bridage en vitesse du véhicule autonome 10, la pire situation de sécurité du trajet en cours est prise en compte, afin de ralentir en conséquence le véhicule autonome 10 et ainsi de limiter la gravité d'un accident potentiel.

La détection est par exemple effective lorsqu'au bout d'une période prédéterminée, le véhicule autonome 10 ne détecte aucun signal émis par le dispositif externe à proximité duquel il circule, ou par réception d'un message d'alerte de panne de ce dispositif émis par la plateforme de supervision notamment en cas de mauvaises conditions climatiques (e.g. gel ou canicule) propres à en détériorer le fonctionnement.

Selon un autre aspect de l'invention, le procédé comprend en outre :
- la réception R_MAJ d'au moins une donnée de mise à jour de la segmentation 27 du trajet prédéfini émises par la plateforme externe de supervision d'une infrastructure pour véhicules autonomes, et
- à partir de ladite au moins une donnée de mise à jour, la mise à jour MAJ de la segmentation 27 du trajet prédéfini stockée au sein de la mémoire 26 ou de l'espace mémoire dédié 26 du véhicule autonome 10 ou bien du dispositif électronique de contrôle 18, lorsque ce dernier est externe au véhicule autonome 10, la segmentation 27 du trajet prédéfini étant alors en effet stockée au sein du dispositif électronique de contrôle 18.

Un tel aspect permet notamment une prise en compte en temps réel de toute déviation du trajet prédéfini du véhicule autonome 10. Selon un aspect particulier, une telle segmentation 27 mise à jour est propre à être stockée avec un numéro de version distinct de la version de segmentation 27 précédemment stockée et utilisée, et le cas échéant à être ultérieurement supprimée, sur requête de la plateforme de supervision, lorsque par exemple une déviation temporaire du trajet du véhicule autonome 10 n'est plus d'actualité.

Selon un autre aspect complémentaire et optionnel, le procédé comprend en outre la transmission T, via un module de transmission non représenté, par exemple un émetteur-récepteur radio embarqué au sein du véhicule autonome 10, à la plateforme externe de supervision, pour traitement et mise à jour de la segmentation 27 du trajet prédéfini, de :
- au moins une donnée représentative de la présence d'élément(s) externe(s) sur le trajet prédéfini, reçues d'au moins un dispositif externe du véhicule autonome 10, et/ou déterminées au moyen d'au moins un capteur 24 embarqué à bord du véhicule autonome 10, et
- l'instant de présence d'élément(s) externe(s) associé déterminé au moyen de l'horloge 14.

L'homme du métier comprendra que, lorsque le dispositif électronique de contrôle 18 est inclus dans la plateforme externe de supervision, la transmission précitée est effectuée en interne de ladite plateforme de supervision.

En d'autres termes, selon cet aspect complémentaire, le véhicule autonome 10 est propre à participer lui-même à la remontée d'informations spatio-temporelles représentatives de la présence d'élément(s) externe(s) propres à perturber potentiellement le bon déroulement du trajet prédéfini qu'il est destiné à parcourir de manière répétitive. Autrement dit, le véhicule autonome est lui-même une source d'actualisation des informations de segmentation de son propre trajet prédéfini.

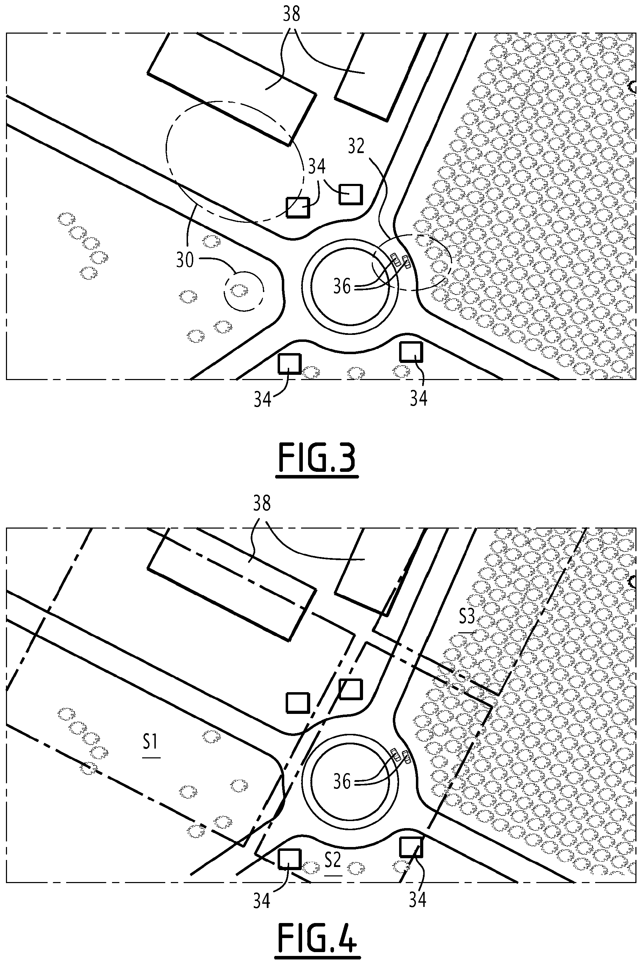

En relation avec les figures 3 à 5, on décrit ci-après un exemple d'application du procédé selon la présente invention.

Sur la figure 3, un secteur géographique comprenant notamment un rond-point propre à être traversé par le véhicule autonome 10 lors de son trajet prédéfini est représenté à un créneau horaire Ci donné.

Sur ce secteur, les zones 30 associées à une forte densité piétonnière ainsi que la zone 32 associée à une densité moyenne de véhicule sont représentées.

De plus à proximité des voies, passages piétons, intersection, une pluralité de dispositifs externes 34 sont installés.

Dans la zone 32 associée à une densité moyenne de véhicule deux véhicules 36 sont présents.

Les zones 30 associées à une forte densité piétonnière correspondent notamment à des espaces verts, des zones piétonnières, des zones d'entrée/sortie de bâtiments 38, par exemple un restaurant universitaire et une faculté.

Sur la figure 4, la segmentation d'une partie du trajet prédéfini propre à être suivi par le véhicule autonome 10 selon l'invention est représentée, cette partie comprenant trois segments S1, S2 et S3, de sorte que le véhicule autonome 10 entre sur le rond-point et en ressort par la troisième sortie ce qui revient à effectuer via le rond-point un virage sur la gauche par rapport à son accès sur le rond-point.

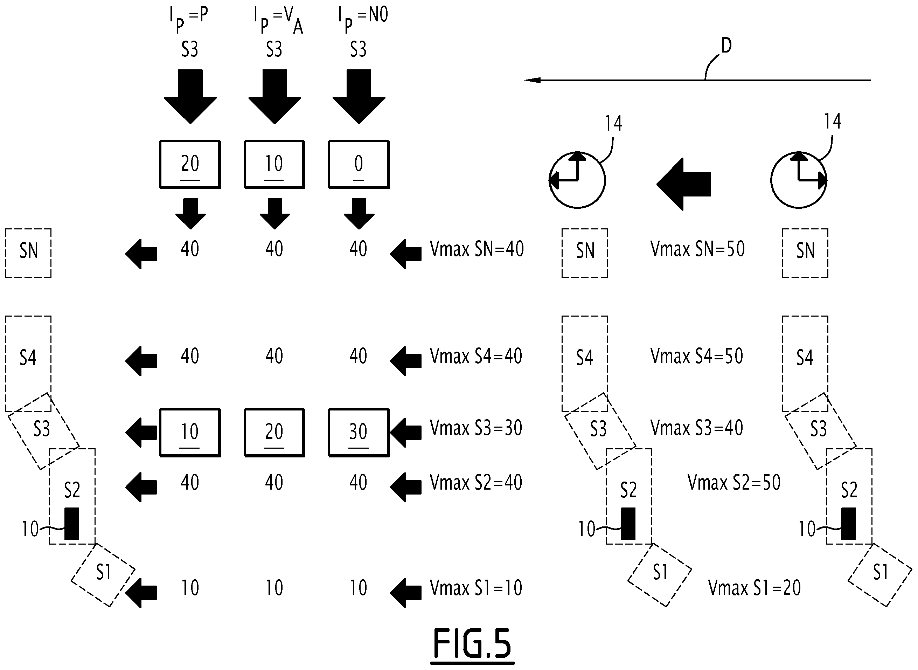

La figure 5 illustre schématiquement l'ajustement en vitesse (i.e. le bridage en vitesse du véhicule autonome 10) mis en oeuvre selon l'invention dans une telle situation de déplacement géographique du véhicule.

Un tel ajustement de la vitesse est mis en oeuvre selon la direction D.

Le trajet prédéfini du véhicule autonome est segmenté en N segments S1, S2, S3, S4, ..., SN respectivement associés pour un instant par défaut correspondant à 15h aux vitesses Vmax S1 = 20km/h, Vmax S2 = 50km/h, Vmax S3 = 40km/h, Vmax S4 = 50km/h, Vmax SN = 50km/h.

Plus précisément, selon la première étape du procédé, l'acquisition GEO, de la part du module de géolocalisation 16, d'une donnée de géolocalisation instantanée du véhicule autonome 10 associée à un instant temporel *t* est mise en oeuvre. La donnée obtenue de géolocalisation instantanée du véhicule autonome 10 correspond à des coordonnées géographiques comprises dans l'intervalle de données de géolocalisation du segment S2 c'est-à-dire au niveau du rond-point.

L'instant temporel *t* d'obtention est 9h, et diffère de l'heure par défaut correspondant à 15h, si bien que le module de détermination 22 applique les vitesses associées à cet instant t de 9h : Vmax S1 = 10km/h, Vmax S2 = 40km/h, Vmax S3 = 30km/h, Vmax S4 = 40km/h, Vmax SN = 40km/h.

Autrement dit, pour le créneau horaire comprenant l'heure de 9h, la vitesse maximale autorisée sur chaque segment du trajet du véhicule autonome 10 est inférieure de 10km/h à celle associée au créneau horaire comprenant l'heure de 15h, ce qui est explicable par le fait que par exemple selon des données, d'observation ou statistiques, connues accessibles par exemple à partir de la base de données STRMTG dans ce segment S2 la valeur de la densité de véhicule(s) et/ou de piéton(s) est plus élevée à 9h qu'à 15h, et qu'une décélération programmée à 9h au regard de la vitesse appliquée à 15h du véhicule autonome est mise en oeuvre automatiquement selon la présente invention pour limiter la gravité d'un accident éventuel impliquant le véhicule autonome 10.

Puis, selon la première variante de réalisation supplémentaire et optionnelle précédemment décrite, le procédé selon la présente invention comprend également une étape R_I_{P} de réception d'une information I_{P} représentative de la présence « P », « V_{A} » ou de l'absence « NO » d'un élément externe au véhicule autonome 10 propre, en cas de contact avec le véhicule autonome 10, à en perturber la trajectoire sur le segment S3 à parcourir, l'information étant émise par au moins un dispositif externe 34 au véhicule autonome 10.

En l'occurrence, selon l'exemple représenté sur la figure 5, si l'information I_{P} est représentative de l'absence « NO » d'élément externe potentiellement perturbateur de trajet sur le segment à parcourir S3, aucun ajustement supplémentaire de la vitesse maximale associée n'est appliqué, Vmax S3 = 30km/h est alors maintenue comme consigne de vitesse à appliquer par le module de conduite autonome 12.

Si l'information I_{P} est représentative de la présence d'un autre véhicule V_{A} potentiellement perturbateur de trajet sur le segment à parcourir S3, un ajustement supplémentaire de la vitesse maximale associée est appliqué :
Vmax S3 = 30-10 = 40km/h est alors obtenue comme consigne de vitesse à appliquer par le module de conduite autonome 12.

Si l'information I_{P} est représentative de la présence d'un piéton P potentiellement perturbateur de trajet sur le segment à parcourir S3, un ajustement supplémentaire de la vitesse maximale associée est appliqué Vmax S3 = 30 - 20 = 10km/h est alors obtenue comme consigne de vitesse à appliquer par le module de conduite autonome 12.

Les vitesses associées aux autres segments S1, S2 ou S4 à SN ne sont pas modifiées en l'absence d'information représentative I_{P} reçue pour ces segments.

On conçoit ainsi que la présente invention propose un contrôle de la vitesse autonome permettant de déterminer automatiquement (i.e. sans intervention humaine) la vitesse maximale à laquelle le véhicule autonome 10 doit ou devra rouler sur le segment courant, respectivement suivant, ce qui permet de limiter l'effort de conception des dispositifs externes ou embarqués de détection de présence ou d'absence d'élément externe propre à perturber le trajet du véhicule autonome sur ces segments.

En particulier, lorsque le dispositif électronique de contrôle 18 est embarqué à bord du véhicule autonome 10, le véhicule autonome 10 déterminer lui-même automatiquement la vitesse maximale à laquelle il doit ou devra rouler sur le segment courant, respectivement suivant, ce qui permet de limiter encore davantage cet effort de conception.

Ainsi, il est possible de requérir un niveau d'effort de conception de sûreté de fonctionnement ASIL D pour la sensibilité de l'horloge 14 et du module de géolocalisation 16, tandis que le niveau d'effort de conception de sûreté de fonctionnement des dispositifs externes ou embarqués de détection de présence ou d'absence d'élément externe propre à en perturber le trajet est « relâchée » à un niveau par exemple ASIL A, permettant d'obtenir un niveau global d'effort de conception de sûreté de fonctionnement pour l'infrastructure de transport autonome et des véhicules autonome associés ASIL C.

## Revendications

1. Procédé de contrôle de la vitesse d'un véhicule autonome (10) muni au moins d'un module de conduite autonome (12) et d'un module de géolocalisation (16) embarqués, le véhicule autonome (10) étant propre à suivre un trajet, prédéfini et segmenté selon au moins une segmentation (27), la segmentation (27) comprenant une pluralité de segments (S1, S2, .., SN) de trajet chacun associé à
+ un intervalle de données de géolocalisation, et
+ un ensemble de valeurs de vitesse de déplacement maximale nominale du véhicule autonome (10), chaque valeur de vitesse étant associée à un instant temporel ou un créneau temporel distinct,
le procédé étant mis en oeuvre par un dispositif électronique de contrôle (18) et comprenant :
- l'acquisition (GEO), de la part du module de géolocalisation (16), d'une donnée de géolocalisation instantanée du véhicule autonome (10) associée à un instant temporel (t) ;
- la détermination (DETERMINATION), en fonction de la donnée de géolocalisation instantanée et de l'instant temporel (t), au sein de la segmentation (27) du trajet, du segment en cours de parcours et/ou du segment suivant à parcourir, et de la valeur de vitesse maximale nominale associée, destinés à être appliqués par le module de conduite autonome (12).

2. Procédé selon la revendication 1, dans lequel le procédé comprend en outre :
- la réception (R_I_{P}) d'une information représentative de la présence ou de l'absence d'un élément externe au véhicule autonome (10) propre, en cas de contact avec le véhicule autonome (10), à en perturber la trajectoire sur le segment en cours de parcours, l'information étant émise par au moins un dispositif externe au véhicule autonome (10),
- en fonction de ladite information, la modification (M_V), ou respectivement le maintien, de la valeur de vitesse maximale nominale associée à appliquer.

3. Procédé selon la revendication 2, dans lequel l'élément externe est classé selon plusieurs catégories comprenant au moins :
- un autre véhicule, distinct du véhicule autonome (10),
- un piéton,
- un phénomène météorologique.

4. Procédé selon la revendication 3, dans lequel chaque catégorie d'élément externe est associée à une valeur de modification de la valeur de vitesse maximale nominale.

5. Procédé selon la revendication 4, dans lequel la valeur de modification de la valeur de vitesse maximale nominale est une valeur de diminution, et dans lequel la valeur de diminution associée à la catégorie d'élément externe correspondant à la catégorie autre véhicule est inférieure à la valeur de diminution associée à la catégorie d'élément externe correspondant à la catégorie piéton.

6. Procédé selon la revendication 5, dans lequel le procédé comprend en outre :
- la détection (DETECT) d'un défaut de fonctionnement dudit au moins un dispositif externe,
- la commutation (28) en mode dégradé (MOD_{D}), de la détermination (DETERMINATION) de la valeur de vitesse maximale nominale associée, en considérant un pire cas de parcours correspondant à la présence d'un élément externe sur le segment en cours de parcours, la catégorie d'élément externe correspondant à la catégorie associée à une valeur maximale de diminution de vitesse.

7. Procédé selon l'une quelconque des revendications précédentes, dans lequel le procédé comprend en outre :
- la réception (R_MAJ) d'au moins une donnée de mise à jour de la segmentation (27) du trajet prédéfini émise par une plateforme externe de supervision d'une infrastructure pour véhicules autonomes,
- à partir de ladite au moins une donnée de mise à jour, la mise à jour (MAJ) de la segmentation (27) du trajet prédéfini.

8. Procédé selon la revendication 7, dans lequel le véhicule autonome (10) est muni en outre d'une horloge (14), et le procédé comprend en outre la transmission (T), à la plateforme externe de supervision, pour traitement et mise à jour de la segmentation (27) du trajet prédéfini, de :
- au moins une donnée représentative de la présence d'élément(s) externe(s) sur le trajet prédéfini, reçues d'au moins un dispositif externe du véhicule autonome (10), et/ou déterminées au moyen d'au moins un capteur (24) embarqué à bord du véhicule autonome (10),
- l'instant de présence d'élément(s) externe(s) associé déterminé au moyen de l'horloge (14).

9. Programme d'ordinateur comprenant des instructions logicielles, qui lorsqu'elles sont exécutées par un processeur, mettent en oeuvre un procédé selon l'une quelconque des revendications précédentes.

10. Dispositif (18) de contrôle de la vitesse d'un véhicule autonome (10), le véhicule autonome (10) étant muni d'au moins d'un module de conduite autonome (12) et d'un module de géolocalisation (16) embarqués, le véhicule autonome (10) étant propre à suivre un trajet, prédéfini et segmenté au moins une segmentation (27), la segmentation (27) comprenant une pluralité de segments de trajet chacun associé à
+ un intervalle de données de géolocalisation, et
+ un ensemble de valeurs de vitesse de déplacement maximale nominale du véhicule autonome, chaque valeur de vitesse étant associée à un instant ou un créneau horaire distinct,
**caractérisé en ce que** le dispositif (18) comprend :
- un module d'acquisition (20) configuré pour acquérir, de la part du module de géolocalisation (16), une donnée de géolocalisation instantanée du véhicule autonome (10), associée à un instant temporel (*t*), et
- un module (22) de détermination configuré pour déterminer, en fonction de la donnée de géolocalisation instantanée et de l'instant (*t*), au sein de la segmentation (27) du trajet, le segment en cours de parcours et/ou du segment suivant à parcourir, et la valeur de vitesse maximale nominale associée, destinés à être appliqués par le module de conduite autonome (12).

11. Véhicule autonome (10) muni au moins d'un module (12) de conduite autonome et d'un module (16) de géolocalisation embarqués, le véhicule autonome (10) étant propre à suivre un trajet, prédéfini et segmenté selon au moins une segmentation (27) du trajet prédéfini, la segmentation (27) comprenant une pluralité de segments de trajet chacun associé à
+ un intervalle de données de géolocalisation, et
+ un ensemble de valeurs de vitesse de déplacement maximale nominale du véhicule autonome, chaque valeur de vitesse étant associée à un instant ou un créneau horaire distinct,
le véhicule (10) autonome comprenant en outre un dispositif (18) de contrôle de sa vitesse,
**caractérisé en ce que** le dispositif de contrôle (18) est selon la revendication 10.

12. Véhicule autonome (10) selon la revendication 11, dans lequel le véhicule autonome (10) est muni en outre d'une horloge (14), et le module (16) de géolocalisation et l'horloge (14) sont conformes à un niveau d'effort de conception de sûreté de fonctionnement ASIL D.

13. Plateforme externe de supervision d'une infrastructure pour véhicules autonomes (10), au moins un véhicule autonome (10) comprenant un module (12) de conduite autonome et un module (16) de géolocalisation embarqués, ledit véhicule autonome (10) étant propre à suivre un trajet, prédéfini et segmenté selon au moins une segmentation (27) du trajet prédéfini, la segmentation (27) comprend une pluralité de segments de trajet chacun associé à
+ un intervalle de données de géolocalisation, et
+ un ensemble de valeurs de vitesse de déplacement maximale nominale du véhicule autonome, chaque valeur de vitesse étant associée à un instant ou un créneau horaire distinct,
la plateforme comprenant au moins un dispositif (18) de contrôle de la vitesse dudit véhicule autonome (10),
**caractérisé en ce que** le dispositif de contrôle (18) est selon la revendication 10.
